# NEW EUROPEAN PATENT SPECIFICATION

(11) **EP 0 404 501 B2**
(45) Date of publication and mention of the opposition decision: **03.12.1997**
(45) Mention of the grant of the patent: 16.03.1994
(21) Application number: 90306654.6
(22) Date of filing: 19.06.1990
(51) Int. Cl.: C03C 8/02

(54) **Overglaze colors for pottery and a method of manufacture thereof**
Überglasuren für Töpferware und Verfahren zu ihrer Herstellung
Surglaçures pour poterie et méthode pour les fabriquer

(30) Priority: 19.06.1989 JP 157571/89; 19.07.1989 JP 187172/89
(43) Date of publication of application: 27.12.1990
(73) Proprietor: SAGA PREFECTURE, Saga-shi, Saga 840 (JP)
(72) Inventor: Yoshida, Shuji, Sasebo-shi, Nagasaki 859-32 (JP); Tsutsumi, Yasuyuki, Saga-gun, Saga 849-02 (JP); Noudomi, Satoru, Kishima-gun, Saga 849-23 (JP); Kawaguchi, Junichi, Nishi Matsuura-gun, Saga 844 (JP)
(74) Representative: Dixon, Donald Cossar

(56) References cited:
- EP-A- 313 904
- FR-A- 1 503 664
- US-A- 2 278 867
- CHEMICAL ABSTRACTS, vol. 80, no. 2, 28th January 1974, page 268, abstract no.18771p, Columbus, Ohio, US; & SU-A-384 796 (SCIENTIFIC-RESEARCH AND DESIGN-TECHNOLOGICAL INSTITUTE OF ENAMELEDCHEMICAL EQUIPMENT) 29-05-1973
- CHEMICAL ABSTRACTS, vol. 75, no. 14, 4th October 1971, page 155, abstract no.90910x, Columbus, Ohio, US; & SU-A-293773 (SCIENTIFIC-RESEARCH AND DESIGN TECHNOLOGICAL INSTITUTE OF ENAMELED CHEMICAL EQUIPMENT) 26-01-1971
- CHEMICAL ABSTRACTS, vol. 86, no. 22, 30th May 1977, page 291, abstract no.160011h, Columbus, Ohio, US; &SU-A-547 404 (V. POLUKHIN et al.) 25-02-1977
- M.B. Volf: Chemical apporche to glass, 1984, Elsevier Publ., pages 391-396

## Description

The present invention relates to overglaze colors for pottery and a method of manufacturing such colors, and in particular to overglaze colors for pottery not containing harmful substances such as lead or cadmium,

In the normal procedure of manufacturing pottery, the raw material is processed to unglazed pottery at 600-1000°C and underglaze decoration is then drawn thereon with pigments such as cobalt or manganese. Then a glaze (frit) is coated on the decoration and the pottery is fired at about 1300°C. Thereafter, the overglaze colors (frit) containing pigments are coated, and the pottery is fired again at about 800°C. The firing temperature is very important for the maintenance of the melting property of the overglaze frit, for the prevention of devitrification and cracking as well as for effective color development of pigments.

The basic conditions of overglaze colors for pottery are: (a) at the firing temperature of about 800°C where the colors and the pigments develop color to the utmost extent, the thermal expansion coefficient must not differ from that of the glaze fired at high temperature of 1300°C; and (2) the frit component must not have any tendency to devitrify and must develop color together with the pigment when the latter is added.

To prepare the conventional type of overglaze colors for pottery, at least one alkali metal oxide and boron oxide are added to silica and alumina, derived e.g. from silica rock and kaolin, in order to improve the melting property of the frit, and zirconium oxide and zinc oxide are added to increase its chemical durability. To the flit thus prepared, pigment is added. Because acid resistance is reduced when alkali metal oxides are used in large quantity, lead oxide which has a high melting property and good affinity with the pigment is used as an essential component.

Furthermore, cadmium oxide is added to increase the color developing property of pigment. Thus, the conventional type of overglaze colors for pottery contain a heavy metal such as lead, or cadmium, in proportion of up to 70 wt % in some cases. Such heavy metals are eluted when the pottery is in use, and such liberated components can cause harmful effects when the pottery is used as tableware such as dishes.

Various attempts have therefore been made to reduce the elution of heavy metals from the glaze and to increase its acid resistance by improving the firing conditions. For example, an attempt has been made to increase the resistance to acid by adding a trace quantity of zirconium oxide to the lead silicate type of frit (Journal of Japanese Ceramic Industry Association; 83 (2), 81; (1975)). A special kiln for underglaze decoration may be used, or a special charging procedure into the kiln. Further, attempts have been made to equalize the intra-kiln temperature, or to increase the temperature gradually within the temperature range of about 400-500°C, to maintain the temperature at more than 760°C for 30-60 minutes, or to promote degassing in the kiln.

However, because the conventional type of overglaze colors contain lead and cadmium as essential components, it is impossible to prevent the elution by the addition of an acid-resistant component or by improvement of firing conditions.

In the safety standards for food additives in accordance with the provisions of the Japanese Food Hygiene Law, Article 10, it is provided that the quantity of lead or cadmium eluted after immersion in 4% acetic acid aqueous solution for 24 hours must be less than 20 ppm for the pottery not to be used for holding liquid, less than 7 ppm for the pottery to be used for liquids, and 2.0 ppm for a container for keeping food. In conventional types of overglaze colors for pottery, harmful metal exceeding the safety standard value is often eluted after even a slight change in the firing conditions.

The object of this invention is to provide overglaze colors for pottery, which contain no harmful metal components such as lead or cadmium, and have the same property as conventional lead-containing overglaze colors for pottery, while maintaining the acid resistance property.

The overglaze color for pottery according to this invention comprises a frit consisting of the following components in weight %:

| | |
|---|---|
| silicon dioxide | 45.5 to 50 |
| alumina | 0.1 to 2 |
| boron oxide | 21 to 40 |
| an alkali metal oxide | 2 to 17 |
| an oxide selected from lanthanum oxide, niobium oxide, tantalum oxide, scandium oxide, samarium oxide, europium oxide, gadolinium oxide, thulium oxide, ytterbium oxide, lutetium oxide, terbium oxide, and dysprosium oxide | 0.1 to 5.0 |
| an alkali earth metal oxide | 0 to 25 |
| zirconium oxide | 0 to 15 |
| zinc oxide | 0 to 15 |

Despite being without lead and cadmium, which the conventional overglaze colors contain, overglaze colors with good color developing property, comparable to the conventional lead-containing overglaze colors for pottery can be obtained.

The thermal expansion coefficient of the overglaze colors for pottery of this invention is 5.0 x 10⁻⁶ to 6.0 x 10⁻⁶ (at 50-350°C), and this is not inferior to the conventional lead-containing colors having a thermal expansion coefficient of 5.0 x 10⁻⁶ to 16 x 10⁻⁶ (at 50-350°C). Also the firing temperature range can be adjusted to 700-900°C where the pigment provides good color development, and the same result as that of a lead-containing frit can be obtained.

Further, the overglaze colors for pottery of this invention have such acid-resistant and alkali-resistant property that, when immersed for one day each in 4% acetic acid aqueous solution and 3% caustic soda aqueous solution, there is no change in external appearance, neither clouding nor blurring occur and lead and cadmium are not detected at all.

The types of some components of the frit are as follows.

First, silica and alumina for the frit are produced from natural silica rock (such as Indian silica rock or Hinooka silica rock) and New Zealand kaolin. Silica rock consists mostly of silicon oxide, and New Zealand kaolin consists of 51 wt % of silicon dioxide and 36 wt % of alumina. Materials of other types may be used if they do not contain impurities.

To provide the rare earth element oxide, the group VB oxides and the zinc oxide, these substances may be added in chemical reagent quality Boron oxide derived from boric acid, and alkali earth metal oxide derived from carbonate may be used. Zirconium oxide derived from zirconium silicate and an alkali metal oxide derived from an alkali carbonate may be used if the oxides can be produced when the frit is formed by firing.

Next the maner of blending, the form of the raw material and the proportions thereof by weight to be used are described.

First, silicon oxide, which is the main component of the frit of the overglaze color of this invention, should be present in amount of 45,5-50 in the frit. If less than 30 is present, the chemical durability is deteriorated, and if more than 70 %, the melting temperature becomes too high.

Alumina is used to modify the skeleton composed of the silica when the frit is formed. When alumina derived from kaolin is used, better reactivity with silicon oxide can be obtained. It is preferable to add 0.1-2% of alumina.

Boron oxide is added to decrease the melting point of the frit. It is preferable to add 21-40 %. If it exceeds 40 %, acid resistance is decreased.

One or more types of alkali metal oxides are added in the form of an alkali metal salt. It is preferable to use one which is converted to oxide through firing, e.g. as alkali carbonate. It is added for the purpose of decreasing the melting point. It is added as 2-17% to the total quantity of overglaze colors. If it exceeds 17 %, no additional acid resistance is obtained, and intrusion may occur.

The overglaze colors for pottery according to the present invention are characterized in that at least one rare earth element oxide, and one or more oxide of an element of Group V B of the Periodic Table, as specified, are also added.

Suitable rare earth element oxides are scandium oxide, lanthanum oxide, samarium oxide, europium oxide, gadolinium oxide, terbium oxide, dysprosium oxide, thulium oxide, ytterbium oxide and lutetium oxide. Examples of the oxides of the elements of Group V B are, niobium oxide and tantalum oxide.

It is preferable to add these oxide substances as reagents in amount of 0.1-15 % to total quantity of the frit. If the content is less than 0.1 %, chemical stability, particularly acid resistance, is lowered, and intrusion is likely to occur. If it exceeds 15 %, the melting temperature is too low and it is insufficiently melted or devitrified.

The essential composition of the overglaze colors for pottery of this invention is as described above, but it is preferable to add the following additives:

Zirconium oxide may be added to give chemical stability, and preferably in amount of 0-15 %. Also, to add luster to the overglaze colors alkaline earth metal oxide, e.g. barium oxide or calcium oxide, may be added, in amounts preferably of 0-25 %.

To give chemical stability, zinc oxide may be added, preferably 0-15 %.

Suitable pigments are copper carbonate, ferric oxide, antimony trioxide and cobalt oxide. By changing the content of copper carbonate, glazes of blue to green color can be produced. Ferric oxide and antimony trioxide give reddish to brownish glazes, and cobalt oxide blue to indigo.

Next, the process of manufacturing the overglaze colors of this invention is described.

First, the natural materials, such as silica rock and kaolin, are blended with the required additives, and the mixture is pulverized to a fine powder of particle size less than 250 µm(passing 60 mesh), and this is melted in a frit-melting crucible at a temperature of 1000-1400° C, preferably 1250-1350°C, for 0.5 to 2 hours and allowed to mature. Then, it is quenched by dropping into water, and it is further pulverized into fine particles of frit several µm in diameter. Portions of this frit are then mixed with selected pigment.

An overglaze color for pottery thus produced is used for coating by being dispersed in an organic or aqueous solvent, e.g. glycerine. It is coated on the glaze layer formed on the unglazed pottery and is fired at 700-900°C, preferably at 800°C.

The following specific examples illustrate this invention

### Example 1

Natural Hinooka silica rock and New Zealand kaolin were used, and zirconium silicate, boric acid, barium carbonate, calcium carbonate, sodium carbonate, potassium carbonate, and lanthanum oxide (all manufactured by Wako Pure Chemical Industry Co., Ltd), were added in such manner that the component ratio in Table 1 is obtained when fired. Each 200 g batch was mixed in a plastic pot.

Next, the mixture was passed through a screen of 60 mesh size and was transferred to a frit-melting crucible. After it was melted and matured at 1300°C for one hour in a melting furnace having a 20 kW Siliconit heating element, the melted product was dropped into water for quenching. Then, it was pulverized into particles of 10-500 m diameter by a vibration mill. Further, it was wet-pulverized for 48 hours in a pot mill, and frit powder of several µm particle diameter was prepared.

To 100 g portion of this frit, the following pigments were added to prepare different types of overglaze colors for pottery:
(1) 5 g of copper carbonate;
(2) 3 g of cobalt oxide;
(3) 10 g of ferric oxide and 2 g of antimony trioxide;
(4) 3 g of Degussa pigment (pigment No. 23419 of Degussa);
(5) 2 g of Degussa pigment (pigment No. 27404).

Each of the above overglaze colors was dispersed in water, coated on the glaze layer of a piece of pottery and was fired at 780°C.

The resulting glaze colors were (1) blue (2) light ultramarine, (3) reddish, (4) yellow and (5) pink.

Table 1 gives the properties of the above overglaze colors namely melting point (which shows almost no change according to the types of the quantity of pigment in the materials of this invention), thermal expansion coefficient after firing, firing temperature, and change after acid resistance and alkali resistance test.

(Class A 5209 of Japanese Industrial Standard 1987).

The constituents shown in Tables 1 to 3 are those of the compositions after firing.

### Example 2

In the oxide composition of Example 1, the calcium oxide was replaced by zinc oxide (of Wako Pure Chemical Industry Co.,Ltd.) All other components were as in Table 1. This mixture was fired, and overglaze colors for pottery were prepared by the procedure of Example 1.

As shown in Table 1, the colors having the same properties as the overglaze colors of the Embodiment 1 were obtained. When the pigments as described in Example 1 were added, the same color development as in Example 1 was observed.

### Example 3

The components of Example 2 were fired in such manner that the oxide composition became as shown in Table 1, and the overglaze colors for pottery were prepared by the procedure of Example 1.

As shown in Table 1, frits having the same properties as in Example 1 were obtained. When the pigments as described in the Example 1 were added, the same color development as in Example 1 was observed.

### Example 4

In the oxide composition of Example 2, zinc oxide was replaced by strontium (Wako Pure Chemical Industry Co., Ltd.) The mixture was fired in such manner that the oxide composition became as shown in Table 1, and the overglaze colors for pottery were prepared as in Example 1.

As shown in Table 1, the colors having the same properties as the overglaze colors of Example 1 were obtained When the pigments as described in the Example 1 were added, the same color development as in Example 1 was observed.

**Table 1**

| Oxide standard frit composition (wt %) | Example 1 | Example 2 | Example 3 | Example 4 |
|---|---|---|---|---|
| SiO₂ | 49.0 | 45.5 | 50.0 | 49.0 |
| ZrO₂ | 5.0 | 4.0 | 5.0 | 5.0 |
| Al₂O₃ | 2.0 | 1.5 | 2.0 | 2.0 |
| La₂O₃ | 2.0 | 5.0 | 5.0 | 2.0 |
| B₂O₃ | 24.0 | 22.0 | 21.0 | 24.0 |
| BaO | 5.0 | 5.0 | 4.5 | 5.0 |
| ZnO | - | 7.0 | 4.5 | - |
| CaO | 5.0 | - | - | - |
| SrO | - | - | - | 5.0 |
| Na₂O | 2.0 | 4.0 | 3.0 | 2.0 |
| K₂O | 6.0 | 6.0 | 5.0 | 6.0 |
| Li₂O | - | - | - | - |
| Bi₂O₃ | - | - | - | - |
| Melting point (°C) | 740 | 720 | 760 | 730 |
| Thermal expansion coefficient | 5.8 × 10⁻⁶ | 5.9 × 10⁻⁶ | 5.5 × 10⁻⁶ | 5.8 × 10⁻⁶ |
| Firing temperature (°C) | 780 | 760 | 800 | 770 |
| External appearance after acid resistance and alkali resistance tests. | No change | No change | No change | No change |

### Example 5

Instead of lanthanum oxide of Example 1, niobium oxide, tantalum oxide, scandium oxide, samarium oxide, europium oxide, gadolinium oxide, terbium oxide, dysprosium oxide, thulium oxide, ytterbium oxide and lutetium oxide were added.

Table 2 summarizes the types of properties of the resultant overglaze colors for pottery as in Table 1.

**Table 2**

| Added component | Melting point (°C) | Thermal expansion coefficient | Firing temperature (°C) | External appearance * |
|---|---|---|---|---|
| Niobium oxide | 750 | 5.7 × 10⁻⁶ | 790 | No change |
| Tantalum oxide | 750 | 5.7 × 10⁻⁶ | 790 | No change |
| Scandium oxide | 750 | 5.8 × 10⁻⁶ | 790 | No change |
| Samarium oxide | 750 | 5.7 × 10⁻⁶ | 790 | No change |
| Europium oxide | 750 | 5.7 × 10⁻⁶ | 790 | No change |
| Gadolinium oxide | 750 | 5.6 × 10⁻⁶ | 790 | No change |
| Thulium oxide | 760 | 5.7 × 10⁻⁶ | 800 | No change |
| Ytterbium oxide | 760 | 5.7 × 10⁻⁶ | 800 | No change |
| Lutetium oxide | 750 | 5.8 × 10⁻⁶ | 790 | No change |
| Terbium oxide | 740 | 5.8 × 10⁻⁶ | 780 | No change |
| Dysprosium oxide | 730 | 5.9 × 10⁻⁶ | 770 | No change |

| | | | | |
|---|---|---|---|---|
| * External appearance after acid resistance and alkali resistance tests. | | | | |

## Claims

1. An overglaze color for pottery comprising a frit and a pigment, said frit consisting of the following components in weight %:
| | |
|---|---|
| silicon dioxide | 45.5 to 50 |
| alumina | 0.1 to 2 |
| boron oxide | 21 to 40 |
| an alkali metal oxide | 2 to 17 |
| an oxide selected from lanthanum oxide, niobium oxide, tantalum oxide, scandium oxide, samarium oxide, europium oxide, gadolinium oxide, thulium oxide, ytterbium oxide, lutetium oxide, terbium oxide, and dysprosium oxide | 0.1 to 5.0 |
| an alkali earth metal oxide | 0 to 25 |
| zirconium oxide | 0 to 15 |
| zinc oxide | 0 to 15 |
and the overglaze having a thermal expansion coefficient of 5.0x10⁻⁶/°C to 6.0x10⁻⁶/°C and showing no visual external change when fired at 700 to 900°C and immersed in a 4% acetic acid aqueous solution and a 3% caustic soda aqueous solution, respectively, for one day.

2. An overglaze color as claimed in Claim 1, wherein the frit also contains one or more of bismuth oxide and strontium oxide.

3. An overglaze color for pottery as claimed in Claim 1 or 2, wherein said pigment is copper carbonate, ferric oxide, antimony trioxide or cobalt oxide.

4. A method of manufacturing an overglaze color for pottery as claimed in any of Claims 1 to 3, wherein silica rock, kaolin, boric acid, an alkali carbonate, one or more types of rare earth element oxides, oxides of the elements of Group VB of the Periodic Table, as specified in claim 1, and any optional ingredient as defined in Claim 1 or 2, are mixed together and melted and matured at 1000-1400°C and the frit is produced by quenching, the frit is pulverized and the pigment is mixed with the frit.

## Patentansprüche

1. Überglasurfarbe für Töpferwaren umfassend eine Fritte und ein Pigment, wobei die Fritte aus den folgenden Bestandteilen in Gew.-% besteht:
| | |
|---|---|
| Siliciumdioxid | 45,5 bis 50 |
| Aluminiumoxid | 0,1 bis 2 |
| Boroxid | 21 bis 40 |
| ein Alkalimetalloxid | 2 bis 17 |
| ein Oxid gewählt aus Lanthanoxid, Nioboxid, Tantaloxid, Scandiumoxid, Samariumoxid, Europiumoxid, Gadoliniumoxid, Thuliumoxid, Ytterbiumoxid, Lutetiumoxid, Terbiumoxid und Dysprosiumoxid | 0,1 bis 5,0 |
| ein Alkalierdmetalloxid | 0 bis 25 |
| Zirkoniumoxid | 0 bis 15 |
| Zinkoxid | 0 bis 15 |
und wobei die Überglasur einen thermischen Ausdehnungskoeffizienten von 5,0 · 10⁻⁶/°C bis 6,0 · 10⁻⁶/°C aufweist und keine beobachtbare äußere Änderung zeigt, wenn sie bei 700 bis 900°C gebrannt und in eine 4%ige wässrige Essigsäure bzw. eine 3%ige wässrige Natriumhydroxidlösung jeweils einen Tag eingetaucht wird.

2. Überglasurfarbe nach Anspruch 1, wobei die Fritte des weiteren einen oder mehrere Bestandteile enthält, gewählt aus Wismutoxid und Strontiumoxid.

3. Überglasurfarbe für Töpferwaren nach Anspruch 1 oder 2, wobei das Pigment Kupfercarbonat, Ferrioxid, Antimontrioxid oder Kobaltoxid ist.

4. Verfahren zur Herstellung einer Überglasur für Töpferwaren nach einem der Ansrüche 1 bis 3, wobei Silikastein, Kaolin, Borsäure, ein Alkalicarbonat, ein oder mehrere Arten von Oxiden der Elemente der seltenen Erden, Oxiden der Elemente der Gruppe VB des Periodensystems wie in Anspruch 1 angegeben und jedes der in Anspruch 1 oder 2 angegebenen wahlweisen Bestandteilen miteinander vermischt und geschmolzen und bei 1000-1400°C gereift werden und wobei die Fritte durch Abschrecken hergestellt wird, und wobei die Fritte pulverisiert wird und das Pigment mit der Fritte vermischt wird.

## Revendications

1. Surglaçure pour poterie, comprenant une fritte et un pigment, ladite fritte comprenant les composants suivants, en % en poids :
| | |
|---|---|
| dioxyde de silicium | 45,5 à 50 |
| alumine | 0,1 à 2 |
| oxyde de bore | 21 à 40 |
| un oxyde de métal alcalin | 2 à 17 |
| un oxyde choisi parmi les suivants : oxyde de lanthane, oxyde de niobium, oxyde de tantale, oxyde de scandium, oxyde de samarium, oxyde d'europium, oxyde de gadolinium, oxyde de thulium, oxyde d'ytterbium, oxyde de lutétium, oxyde de terbium et oxyde de dysprosium | 0,1 à 50 |
| un oxyde de métal alcalino-terreux | 0 à 25 |
| oxyde de zirconium | 0 à 15 |
| oxyde de zinc | 0 à 15 |
et la surglaçure ayant un coefficient de dilatation thermique de 5,0 x 10⁻⁶/°C à 6,0 x 10⁻⁶/°C et ne présentant aucun changement extérieur visible lorsqu'elle est cuite à 700 à 900°C et plongée respectivement dans une solution aqueuse d'acide acétique à 4 % et dans une solution aqueuse de soude caustique à 3 % pendant un jour.

2. Surglaçure selon la revendication 1, dans laquelle la fritte contient également un ou plus parmi l'oxyde de bismuth et l'oxyde de strontium.

3. Surglaçure pour poterie selon la revendication 1 ou la revendication 2, dans laquelle ledit pigment est le carbonate de cuivre, l'oxyde ferrique, le trioxyde d'antimoine ou l'oxyde de cobalt.

4. Procédé pour préparer une surglaçure pour poterie selon l'une des revendications 1 à 3, dans laquelle on mélange ensemble de la roche siliceuse, du kaolin, de l'acide borique, un carbonate alcalin, un ou plusieurs types d'oxydes d'éléments de terres rares, des oxydes des éléments du groupe VB du Tableau Périodique comme spécifié dans la revendication 1, et tout ingrédient facultatif comme défini dans la revendication 1 ou la revendication 2, et on les fond et on les laisse vieillir à 1000-1400°C, on produit la fritte par refroidissement brutal, on pulvérise la fritte et on mélange le pigment avec la fritte.
